**Europäisches Patentamt**

**European Patent Office**

**Office européen des brevets**

(11) Veröffentlichungsnummer: **0 399 314**

**A1**

## EUROPÄISCHE PATENTANMELDUNG

(21) Anmeldenummer: **90108957.3**

(22) Anmeldetag: **12.05.90**

(51) Int. Cl.5: **B60T 8/30, B60G 17/015**

(30) Priorität: **26.05.89 DE 3917092**

(43) Veröffentlichungstag der Anmeldung:
**28.11.90 Patentblatt 90/48**

(84) Benannte Vertragsstaaten:
**DE FR IT SE**

(71) Anmelder: **ROBERT BOSCH GMBH**
**Postfach 10 60 50**
**D-7000 Stuttgart 10(DE)**

(72) Erfinder: **Engfer, Ortwin**
**Bundschuhstrasse 14**
**D-7000 Stuttgart 31(DE)**
Erfinder: **Zehaczek, Helmut, Dipl.-Ing.**
**Bergstrasse 4**
**D-7101 Eberstadt(DE)**

(54) **Vorrichtung zur achslastabhängigen Bremskraftregelung für Bremsanlagen von Fahrzeugen.**

(57) Eine Vorrichtung zur achslastabhängigen Bremskraftregelung für Bremsanlagen von Fahrzeugen weist einen in einem Reglergehäuse (23) verschiebbaren Steuerkolben (29) zur Modulation des eingesteuerten Bremsdrucks entsprechend dem Beladungszustand des Fahrzeugs auf. Der Steuerdruck für den Steuerkolben (29) ist von mindestens einem Federbalg (12) abgeleitet, der zusätzlich zu den mechanischen Schwingfedern (11) den Fahrzeugaufbau (10) gegen die Fahrzeugachse (13) abstützt. Um auch bei Niveauregulierung des Fahrzeugaufbaus (10) eine an die Achslast angepaßte Bremskraftregelung sicherzustellen, sind Mittel (17) vorgesehen, die eine zur Änderung des Höhenniveaus des Fahrzeugaufbaus (10) vorzunehmenden Druckänderung in den Federbälgen (12) bezüglich des Steuerdrucks für den Steuerkolben (29) so kompensieren, daß die auf den Steuerkolben (29) wirkende Druckkraft im wesentlichen unverändert bleibt.

Fig. 1

EP 0 399 314 A1

## Vorrichtung zur achslastabhängigen Bremskraftregelung für Bremsanlagen von Fahrzeugen

Stand der Technik

Die Erfindung geht aus von einer Vorrichtung zur achslastabhängigen Bremskraftregelung für Bremsanlagen von Fahrzeugen, insbesondere von Personenkraftwagen, der im Oberbegriff des Anspruchs 1 definierten Gattung.

Solche achslastabhängigen Bremskraftregelvorrichtungen (ALB) - wie sie z.B. aus der DE 32 09 247 A1 bekannt sind - dienen dazu, bei gleicher Druckkraft am Bremspedal oder Bremshebel entsprechend der Zuladung des Kraftfahrzeugs einen mehr oder weniger großen Bremsdruck in die Bremszylinder der Radbremsen einzusteuern. Hierzu wird mittels eines Steuerkolbens ein vom Hauptbremsregler eingestellter Bremsdruck entsprechend der Zuladung moduliert. Der achslastabhängige Steuerdruck für den Steuerkolben wird dabei in verschiedener Weise, z.B. mechanisch oder elektrisch, aufgebracht. Bei Fahrzeugen mit Zusatzfederung, wie Luftfedern oder Hydraulikfedern, die neben den mechanischen Schwingfedern einen Teil des Aufbaugewichts des Fahrzeugs an der Fahrzeugachse abstützen, wird der Steuerdruck von dem in den Zusatzfedern, im folgenden Federbälge genannt, herrschenden Druckmitteldruck abgeleitet (DE 32 09 247 A1, Fig. 4). Wird das Fahrzeug mehr oder weniger stark beladen, so steigt der Druckmitteldruck in den Federbälgen mehr oder weniger stark an. Proportional dazu ändert sich der Steuerdruck am Steuerkolben und entsprechend der ausgesteuerte Bremsdruck für die Bremszylinder.

Ist bei Fahrzeugen mit pneumatischer oder hydraulischer Zusatzfederung eine sog. Niveauregelung vorgesehen, d.h. eine willkürliche Einstellung der Höhe des Fahrzeugaufbaus über der Fahrzeugachse in mindestens zwei Niveaustufen, so ändert sich bei gleichem Beladungszustand des Fahrzeugs im Falle der Niveauänderung auch der Druckmitteldruck in den Federbälgen, da diese je nach gewünschter Höhenlage des Fahrzeugaufbaus einen mehr oder weniger großen Anteil des Aufbaugewichts tragen und die mechanischen Federn mehr oder weniger stark entlasten. Da sich hierdurch auch der Steuerdruck am Steuerkolben ändert, werden bei unverändertem Beladungszustand und unterschiedlichen Höhenlagen des Fahrzeugaufbaus unterschiedlich große Bremsdrücke in die Bremszylinder eingesteuert. Die Folge davon ist ein an den Beladungszustand angepaßtes Bremsverhalten des Fahrzeugs nur in einer einzigen Höhenlage des Aufbaus und ein nicht angepaßtes Bremsverhaltens in den übrigen Lagen des Fahrzeugaufbaus, was z.B. zu einer Unterbremsung des Fahrzeugs bei niedrigem Aufbauniveau oder zu einer Übersteuerung des Fahrzeugs im höchsten Aufbauniveau führt.

Vorteile der Erfindung

Die erfindungsgemäße achslastabhängige Bremskraftregelvorrichtung mit den kennzeichnenden Merkmalen des Anspruchs 1 hat demgegenüber den Vorteil, daß in allen Höhenlagen des Fahrzeugaufbaus stets der richtige Beladungszustand sensiert und ein daran angepaßter Bremsdruck für die Bremszylinder zur Verfügung gestellt wird. Damit ist eine achslastabhängige Bremskraftregelung auch bei Fahrzeugen mit Niveauregelung möglich. In der erfindungsgemäßen Vorrichtung können herkömmliche Bremskraftregler, wie diese beispielsweise aus der DE 32 09 247 bekannt sind, ohne nennenswerte konstruktive Änderungen eingesetzt werden.

Durch die in den weiteren Ansprüchen aufgeführten Maßnahmen sind vorteilhafte Weiterbildungen und Verbesserungen der im Anspruch 1 angegebenen Vorrichtung möglich.

Steht ein zweikreisiger Bremskraftregler zur Verfügung, d.h. ein Bremskraftregler mit zwei getrennten, auf einen gemeinsamen Steuerkolben wirkenden Steuereingängen, so weisen die Kompensationsmittel eine Schaltvorrichtung auf, die den einen oder anderen Steuereingang oder beide mit dem Steuerdruck beaufschlagen, je nachdem, welches Niveau des Fahrzeugaufbaus eingestellt worden ist. Die mit den Steuereingängen in Verbindung stehenden Steuerflächen an dem Steuerkolben müssen entsprechend ausgelegt werden, so daß die am Steuerkolben angreifende Verschiebekraft bei jedem Niveau des Fahrzeugaufbaus - gleicher Beladungszustand vorausgesetzt - konstant bleibt.

Die Schaltvorrichtung kann im Falle der Niveaueinstellung in nur zwei Stufen als 4/2-Wegemagnetventil oder als 3/2-Wegemagnetventil ausgebildet werden. Im ersten Fall ist jeder Steuereingang des zweikreisigen Bremskraftreglers mit einem von vier gesteuerten Anschlüssen des Magnetventils verbunden. Von den beiden anderen Ventilanschlüssen ist der eine mit den Federbälgen verbunden und der andere entlastet. In der einen Schaltstellung des Magnetventils ist nur ein Steuereingang mit Druck beaufschlagt, während der andere entlastet ist. In der anderen Schaltstellung des Magnetventils sind beide Steuereingänge des Bremskraftreglers an die Federbälge angeschlossen und mit dem dort herrschenden Druckmitteldruck beaufschlagt.

Im Falle eines 3/2-Wegemagnetventils ist der eine Steuereingang des Bremskraftreglers unmittelbar und der andere Steuereingang über das 3/2-Wegemagnetventil mit dem mindestens einen Federbalg verbunden. Dem 3/2-Wegemagnetventil kann noch ein Druckbegrenzer vorgeschaltet sein.

Wird gemäß einer bevorzugten Ausführungsform der Erfindung das 3/2-Wegemagnetventil in das Reglergehäuse des Bremskraftreglers integriert, so ist nur noch ein externer Steueranschluß am Reglergehäuse vorhanden. Die von der einen Steuerfläche am Steuerkolben begrenzte Steuerkammer steht mit diesem Steueranschluß direkt in Verbindung, während die von der anderen Steuerfläche am Steuerkolben begrenzte Steuerkammer über das integrierte 3/2-Wegemagnetventil mit der ersten Steuerkammer verbunden ist. Je nach Schaltstellung des Magnetventils wird die zweite Steuerkammer entlastet oder mit der ersten Steuerkammer verbunden.

Steht nur ein einkreisiger Bremskraftregler mit einem einzigen Steueranschluß zur Verfügung, so werden die Kompensationsmittel durch ein Drucksteuerventil realisiert, das zwischen mindestens zwei Kennlinien umschaltbar ausgebildet ist. Gegenüber den vorherigen Ausführungsformen hat dies den Vorteil einer geringeren Anzahl von Komponenten und der Möglichkeit der Einstellung einer Vielzahl von Niveaulagen des Fahrzeugaufbaus mit einem konstruktiv unveränderten Bremskraftregler. Für jedes Niveau des Fahrzeugaufbaus wird eine Kennlinie im Drucksteuerventil vorgesehen, wobei die Kennlinieumschaltung elektrisch und/oder pneumatisch oder hydraulisch erfolgt. Allerdings kann das Drucksteuerventil nicht mit vorhandenen Komponenten realisiert, sondern muß neu gestaltet werden. Bei der Verwendung des erfindungsgemäßen Drucksteuerventils wird der pneumatische oder hydraulische Anschlußplan wesentlich vereinfacht.

Zeichnung

Die Erfindung ist anhand von in der Zeichnung dargestellten Ausführungsbeispielen in der nachfolgenden Beschreibung näher erläutert. Es zeigen:

Fig. 1 einen Prinzipskizze eines Fahrzeugs mit Niveauregelung und einer Vorrichtung zur achslastabhängigen Bremskraftregelung,

Fig. 2 einen Längsschnitt eines Bremskraftreglers in der Vorrichtung in Fig. 1,

Fig. 3 eine Prinzipskizze eines Fahrzeugs mit Niveauregelung und einer Vorrichtung zur achslastabhängigen Bremskraftregelung gemäß einem zweiten Ausführungsbeispiel,

Fig. 4 einen Längsschnitt einer Vorrichtung zur achslastabhängigen Bremskraftregelung gemäß einem dritten Ausführungsbeispiel,

Fig. 5 ausschnittweise eine Prinzipskizze der Vorrichtung in Fig. 4 zur Erläuterung der Wirkungsweise,

Fig. 6 eine Prinzipskizze eines Fahrzeugs mit Niveauregelung und einer Vorrichtung zur achslastabhängigen Bremskraftregelung gemäß einem vierten Ausführungsbeispiel,

Fig. 7 einen Längsschnitt eines Drucksteuerventils der Vorrichtung in Fig. 6, schematisch dargestellt,

Fig. 8 ein Diagramm der Kennlinien des Drucksteuerventils in Fig. 7.

Beschreibung der Ausführungsbeispiele

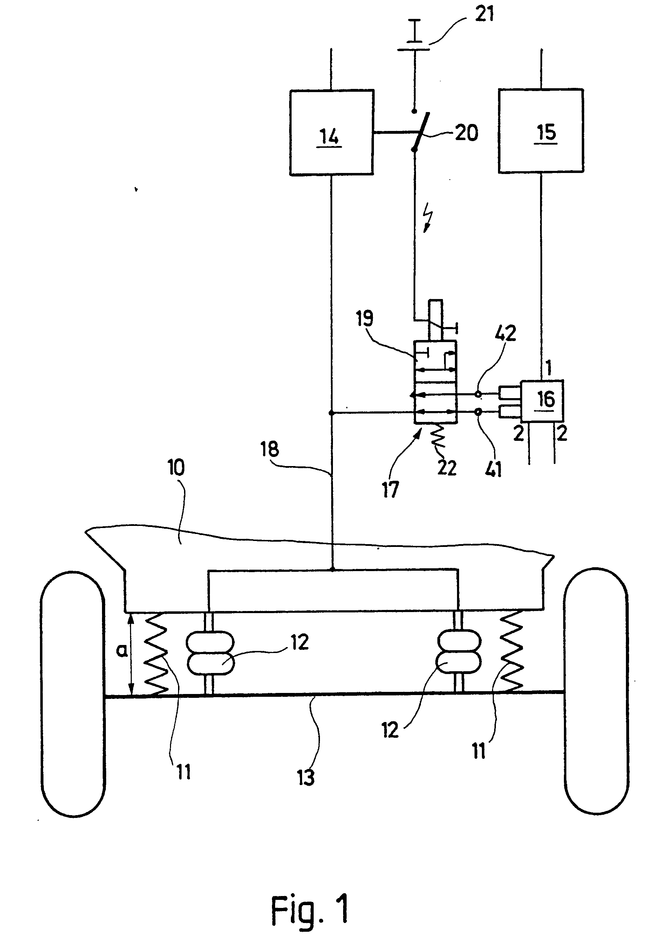

Von dem in Fig. 1 schematisch dargestellten Fahrzeug ist mit 10 die Fahrzeugkarosserie oder der Fahrzeugaufbau angedeutet, der einerseits über mechanische Schwingfedern 11 und andererseits über Luftfedern 12 an den Fahrzeugachsen 13 abgestützt ist. Die mechanischen Federn 11 und die Luftfedern 12 sind parallel geschaltet und nehmen jeweils einen Teil des Aufbaugewichts auf.

Das skizzierte Fahrzeug ist mit einer Niveauregelung ausgerüstet, mit welchen der Abstand a des Fahrzeugaufbaus 10 über der Fahrzeugachse 13 eingestellt werden kann. Diese Einstellung erfolgt stufig, wobei mindestens zwei Niveauhöhen vorgesehen sind. Die Einstellung erfolgt mittels eines Niveaureglers 14, der durch Einsteuern einer bestimmten Luftmenge in die Luftfedern 12 den Fahrzeugaufbau 10 anhebt oder absenkt. Bei Niveauanhebung übernehmen die Luftfedern 12 einen höheren Anteil am Aufbaugewicht, so daß die Schwingfedern 11 entlastet werden, während bei Niveauabsenkung durch Ablassen von Druckluft die Luftfedern 12 sich zusammendrücken und einen geringeren Teil des Aufbaugewichtes tragen, die Schwingfedern 11 also stärker belastet werden. Mit Niveaureduzierung verringert sich damit der Luftdruck in den Luftfedern 12, während bei Niveauanhebung der Druck in den Luftfedern 12 ansteigt.

Die hier nicht skizzierte Bremsanlage des Fahrzeugs ist mit einer Vorrichtung zur achslastabhängigen Bremskraftregelung ausgerüstet. Mittels einer solchen Vorrichtung wird der bei Betätigung des Bremspedals von einem Hauptbremsregler 15 der Bremsanlage vorgegebene Bremsdruck entsprechend der Zuladung des Fahrzeugs in der Weise moduliert, daß mit zunehmender Beladung der Bremsdruck verstärkt wird. Die Vorrichtung zur achslastabhängigen Bremskraftregelung umfaßt einen zweikreisigen Bremskraftregler 16 und eine Schaltvorrichtung 17. Der Bremskraftregler 16 ist zwischen dem Hauptbremsregler 15 und den hier nicht dargestellten Radbremszylindern eingeschaltet. Mit 1 ist dabei der Regleranschluß zum Hauptbremsregler 15, mit 2 die Regleranschlüsse zu den Radbremszylindern und mit 41,42 die beiden getrennten Steueranschlüsse des Bremskraftreglers 16 bezeichnet. Die willkürlich betätigbare Schaltvorrichtung 17 ist zwischen den Steueranschlüssen 41,42 des Bremskraftreglers 16 und einer zu den Luftfedern 12 führenden Druckluftleitung 18 angeordnet. Die Betätigung der Schaltvorrichtung 17 ist mit dem Niveauregler 14 derart gekoppelt, daß bei Niveauumschaltung die Schaltvorrichtung 17 umschaltet und jeweils einen von mindestens zwei Schaltstellungen einnimmt. Im Ausführungsbeispiel der Fig.1, bei welchem eine Niveauregelung in zwei Niveaustufen erfolgt, ist die Schaltvorrichtung 17 als 4/2-Wegemagnetventil 19 ausgebildet, von dessen insgesamt vier gesteuerten Anschlüssen zwei Anschlüsse mit den Steueranschlüssen 41,42 und ein Anschluß mit der Druckluftleitung 18 verbunden und der vierte Anschluß entlüftet ist. Das 4/2-Wegemagnetventil 19 ist derart ausgebildet, daß in seiner unerregten Grundstellung der Steueranschluß 41 mit der Druckluftleitung 18 verbunden und der Steueranschluß 42 entlüftet ist, während in seiner Umschalt- oder Arbeitsstellung beide Steueranschlüsse 41,42 mit der Druckluftleitung 18 verbunden sind. Die Umschaltung des Magnetventils 19 erfolgt mittels eines elektrischen Schalters 20, der mit dem Niveauregler 14 so gekoppelt ist, daß er bei Niveauabsenkung geschlossen und bei Niveauanhebung geöffnet wird. In der Schließstellung wird der Betätigungsmagnet des Magnetventils 19 an eine Stromquelle 21 gelegt und dadurch das Magnetventil 19 in seine Arbeitsstellung umgeschaltet. Wird der Schalter 20 wieder geöffnet, so fällt das Magnetventil 19 unter Wirkung seiner Rückstellfeder 22 wieder in seine Grund- oder Ruhestellung zurück, die in Fig.1 dargestellt ist.

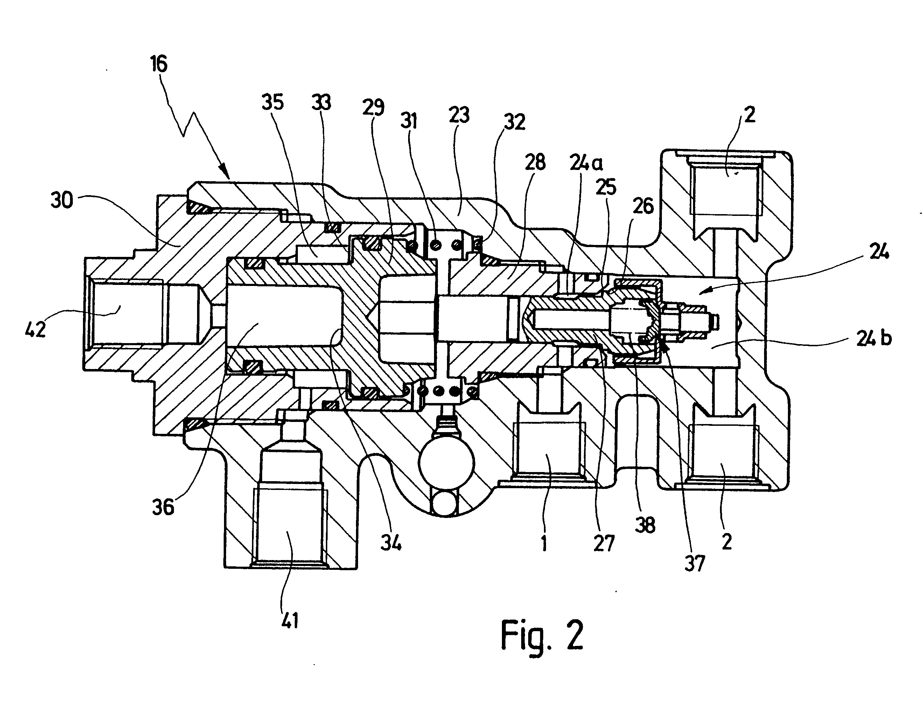

Der Aufbau des Bremskraftreglers 16 ist in Fig. 2 im einzelnen dargestellt. Er besitzt ein Reglergehäuse 23 mit einem Ventilraum 24, der durch einen Ventilsitz 25 in zwei Ventilraumabschitte 24a und 24b unterteilt ist. Der Ventilraumabschnitt 24a steht mit dem Regleranschluß 1 und der Ventilraumabschnitt 24b mit den beiden Regleranschlüssen 2 in Verbindung. Mit dem Ventilsitz 25 arbeitet ein Ventilglied 26 zusammen, das von einer Ringschulter an einem Ventilkolben 27 gebildet ist. Der Ventilkolben 27 ist in einer im Reglergehäuse 23 eingesetzten Führungsmuffe 28 axial verschieblich geführt und mit einem Steuerkolben 29 starr verbunden. Der Steuerkolben 29 ist in einem stirnseitig in das Reglergehäuse 23 eingesetzten Gehäuseeinsatz 30 gegen eine Rückstellfeder 31 axial verschieblich geführt, die sich einerseits an einer Ringschulter 32 im Reglergehäuse 23 und andererseits an dem Steuerkolben 29 abstützt. Der Steuerkolben 29 trägt zwei Steuerflächen 33,34, die jeweils eine Steuerkammer 35 bzw. 36 begrenzen.

Die Steuerkammer 35 steht mit dem Steueranschluß 41 und die Steuerkammer 36 mit dem Steueranschluß 42 in Verbindung. Die Größe der Steuerflächen 33,34 ist so bemessen, daß das Produkt aus der Steuerfläche 33 und den bei Hochniveau des Fahrzeugaufbaus 10 über den Steueranschluß 41 in die Steuerkammer 35 eingesteuerten Steuerdruck gleich der Summe der Produkte aus den Steuerflächen 33,34 und den bei Tiefniveau des Fahrzeugaufbaus über die zugeordneten Steueranschlüsse 41,42 in die zugeordneten Steuerkammern 35,36 eingesteuerten Steuerdruck, so daß sich in beiden Fällen eine konstante Verschiebekraft für den Steuerkolben 29 ergibt. Gleicher Beladungszustand des Fahrzeugs ist dabei vorausgesetzt. Im Ventilkolben 27 ist außerdem ein Druckregelventil 37 integriert, das einerseits mit dem Regleranschluß 1 und andererseits mit den Regleranschlüssen 2 in Verbindung steht und proportional dem am Regleranschluß 1 anstehenden Druck öffnet.

Die Wirkungsweise der beschriebenen Vorrichtung zur achslastabhängigen Bremskraftregelung in Verbindung mit der Niveauregelung des Fahrzeugs ist wie folgt:

Ist der Fahrzeugaufbau 10 von dem Niveauregler 14 auf Normalniveau (NN) angehoben, so ist in den Luftfedern 12 ein bestimmter Luftdruck eingesteuert. Der Schalter 20 ist geöffnet und das 4/2-Wegemagnetventil 19 unerregt, so daß es seine in Fig.·1 dargestellte Grund- oder Ruhestellung einnimmt. Der in den Luftfedern 12 vorhandene Luftdruck steht an dem Steueranschluß 41 an, während der Steueranschluß 42 durch das Magnetventil 19 entlüftet ist. Der am Steueranschluß 41 anstehende Luftdruck wirkt als Steuerdruck auf die Steuerfläche 33 am Steuerkolben 29 und verschiebt diesen gegen die Rückstellfeder 31 um einen bestimmten Hub. Damit wird der Ventilkolben 27 um den gleichen Hub verschoben und das Ventilglied 26 hebt von dem Ventilsitz 25 ab. Bei auf dem Ventilsitz 25 aufsitzendem Ventilglied 26 wird der vom Hauptbremsregler 15 am Regleranschluß 1 in den Bremskraftregler 16 in Abhängigkeit von der Betätigung des Bremspedals eingesteuerte Bremsdruck durch das Druckventil 37 proportional aber reduziert über die Regleranschlüsse 2 in die Radbremszylinder eingesteuert. Mit Abheben des Ventilglieds 26 vom Ventilsitz 25 wird dieser in die Radbremszylinder eingesteuerte Bremsdruck um einen Betrag erhöht, der abhängig ist von dem auf den Steuerkolben 29 wirkenden Steuerdruck, der wiederum gleich dem in den Luftfedern 12 herrschenden Luftdruck ist. Wird die Zuladung des Fahrzeugs erhöht, so führt das erhöhte Aufbaugewicht bei unverändertem Niveau des Fahrzeugaufbaus 10 zu einer Vergrößerung des Luftdrucks in den Luftfedern 12. Damit steigt auch der Steuerdruck am Steuerkolben 29 an, so daß der Hub des Ventilkolbens 27 und damit der des Ventilglieds 26 vergrößert wird. Damit steigt entsprechend der lastabhängige Betrag des Bremsdrucks an.

Wird in der Niveauregelung nunmehr ein niedriges Niveau (TN) des Fahrzeugaufbaus 10, also ein verkleinerter Abstand a des Fahrzeugaufbaus 10 von der Fahrzeugachse 13 angewählt, so reduziert der Niveauregler 14 den Luftdruck in den Luftfedern 12 solange, bis dieses Niveau erreich ist. Gleichzeitig wird der Schalter 20 geschlossen, so daß das 4/2-Wegemagnetventil 19 umschaltet und beide Steueranschlüsse 41,42 des Bremskraftreglers 16 an die Luftfedern 12 anschließt. Durch die beschriebene Auslegung der Steuerflächen 33,34 am Steuerkolben 29 bewirkt nunmehr der reduzierte Luftdruck in den Luftfedern 12 eine gleiche Verstellkraft am Steuerkolben 29, so daß der Ventilkolben 27 und damit das Ventilglied 26 bei gleicher Zuladung um den gleichen Betrag verschoben bleiben und somit die lastabhängige Bremsdruckkomponente in dem an den Regleranschlüssen 2 ausgesteuerten Bremsdruck unverändert bleibt. Erst wenn bei unveränderter Niveaueinstellung die Zuladung des Fahrzeugs geändert wird, verändert sich auch die lastabhängige Bremsdruckkomponente in Abhängigkeit von dem in den Luftfedern 12 sich ändernden Luftdruck.

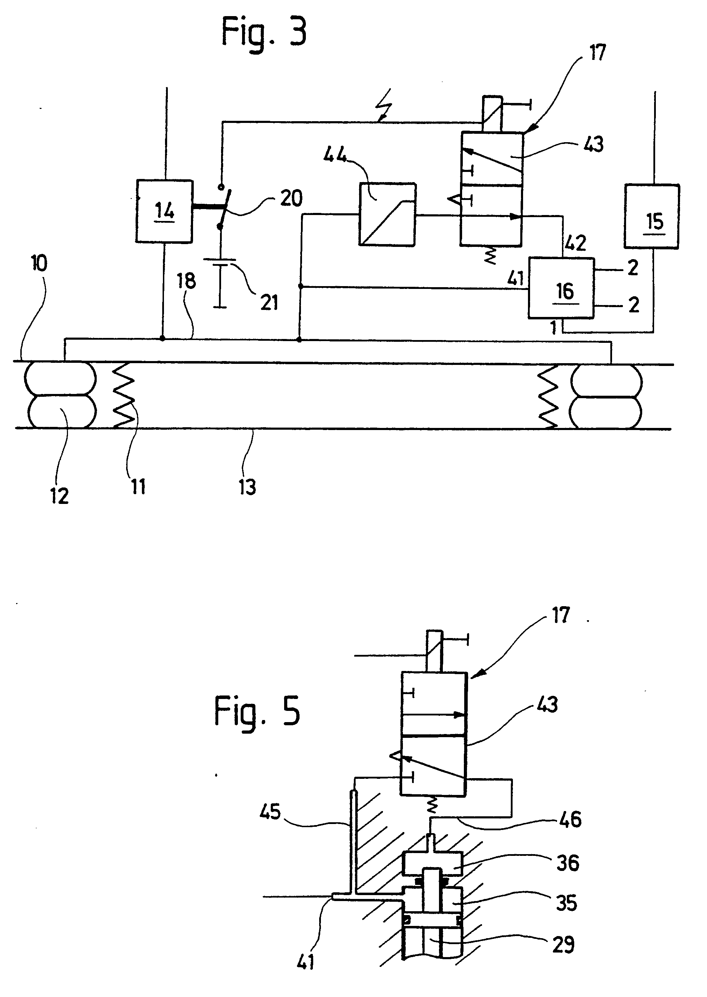

In Fig. 3 ist eine modifizierte Bremskraftregelvorrichtung als Prinzipskizze dargestellt. Soweit sie Bauteile enthält, die mit denen in Fig. 1 übereinstimmen, sind diese Bauteile mit den gleichen Bezugszeichen versehen. Der wesentliche Unterschied zu der Vorrichtung in Fig. 1 besteht darin, daß die Schaltvorrichtung 17 als 3/2-Wegemagnetventil 43 ausgebildet und diesem ein Druckregler 44 vorgeschaltet ist. Von den drei gesteuerten Anschlüssen des 3/2-Wegemagnetventils 43 ist einer mit dem Steueranschluß 42 des Bremskraftreglers 16 und der andere über den Druckregler 44 mit der den Niveauregler 14 und die Luftfedern 12 verbindenen Druckluftleitung 18 verbunden. Der dritte Ventilanschluß ist entlüftet. Das 3/2-Wegemagnetventil 43 ist so ausgestaltet, daß der Steueranschluß 42 in der Arbeitsstellung des Magnetventils 43 (in Fig. 3 dargestellt) über den Druckregler 44 mit den Luftfedern 12 verbunden und in der Grundstellung des Magnetventils 43 entlüftet ist. Der Steueranschluß 41 des Bremskraftreglers 16 ist ständig mit der Druckluftleitung 18 verbunden. Der Aufbau des Bremskraftreglers 16 ist identisch mit Fig. 2. In der Wirkungsweise der achslastabhängigen Bremskraftregelvorrichtung ist kein Unterschied zu Fig. 1.

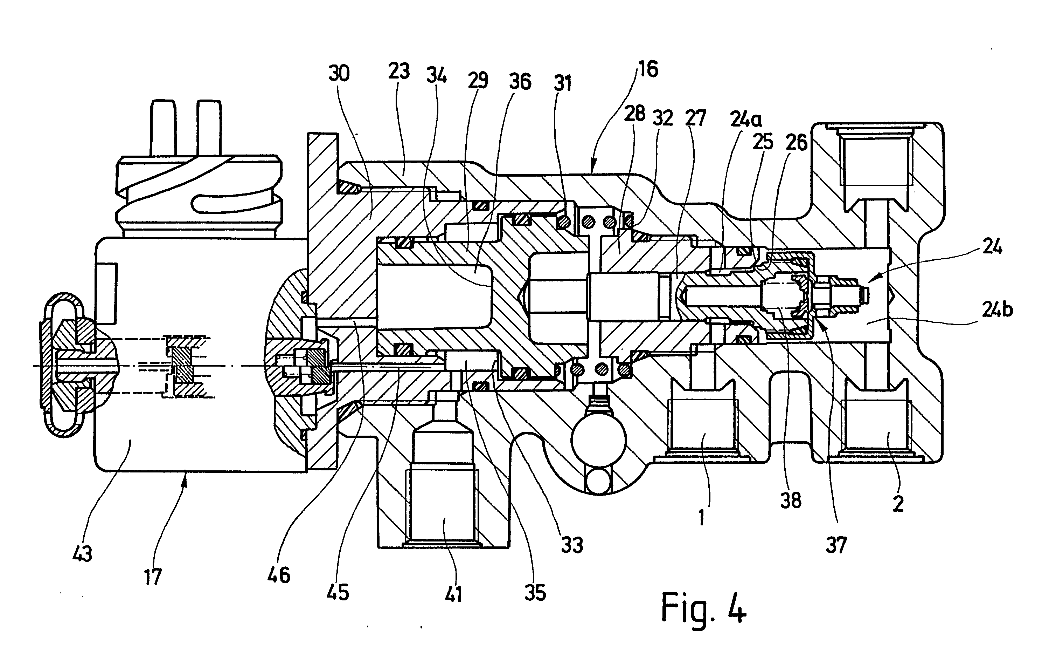

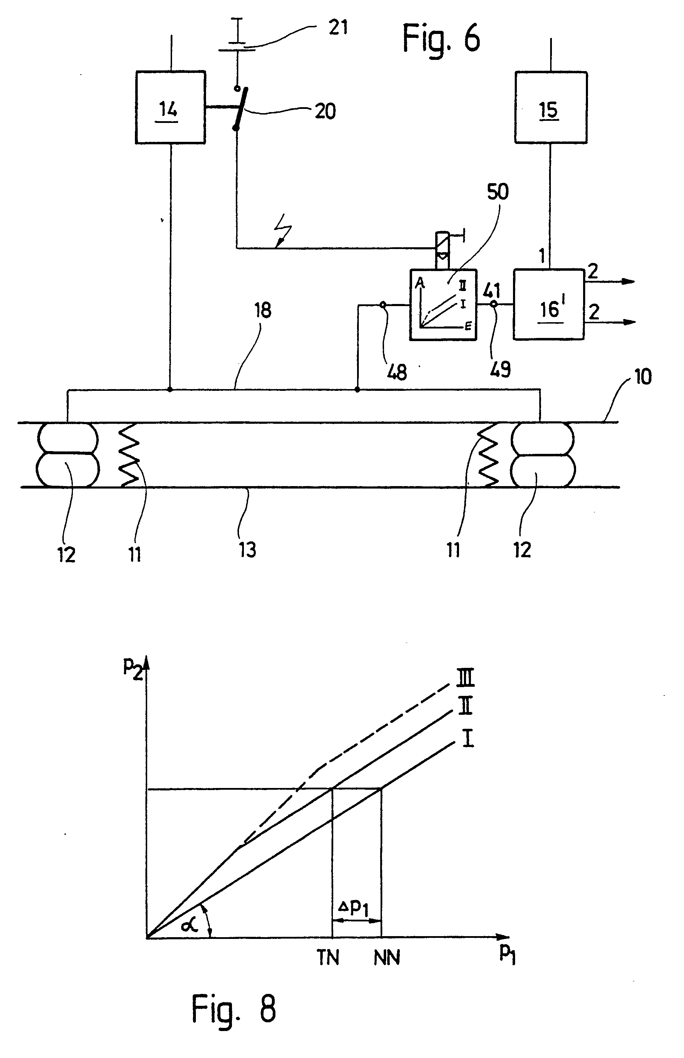

Bei Wegfall des Druckreglers 44 kann bei der Vorrichtung gemäß Fig. 3 das 3/2-Wegemagnetventil 43 in den Bremskraftregler 16 integriert werden. Eine solche Ausführungsform ist in Fig. 4 im Längsschnitt zu sehen. Bei dem Bremskraftregler 16, der weitgehend identisch mit dem in Fig. 2 dargestellten Bremskraftregler ist, ist der zweite Steueranschluß 42 weggefallen und an der Stirnseite des Reglergehäuses 23 das 3/2-Wegemagnetventil 43 angeflanscht. Die mit dem ersten Steueranschluß 41 in Verbindung stehende Steuerkammer 35 ist über einen Bohrungskanal 45 und die Steuerkammer 36 ist über einen Bohrungskanal 46 mit dem 3/2-Wegemagnetventil 43 verbunden. Das Anschlußschema des 3/2-Wegemagnetventils 43 ist in Fig. 5 dargestellt. Danach sind die Bohrungskanäle 45 und 46 an je einen Ventilanschluß geführt, während der dritte Ventilanschluß entlüftet ist. Das 3/2-Wegemagnetventil 43 ist in seiner unerregten Grundstellung dargestellt, in welcher die Steuerkammer 36 über den Bohrungskanal 46 entlüftet und der Bohrungskanal 45 abgeschlossen ist. Wird das 3/2-Wegemagnetventil 43 in seine Arbeitsstellung überführt, so sind die beiden Steuerkammern 35,36 über die Bohrungskanäle 45,46 miteinander verbunden.

Die Wirkungsweise der Bremskraftregelvorrichtung ist identisch wie vorstehend beschrieben.

In Fig. 6 ist wiederum ein Prinzipschaltbild eines Fahrzeugs mit Niveauregelung und achslastabhängiger Bremskraftregelvorrichtung dargestellt, wobei letztere gegenüber den vorher beschriebenen Ausführungsbeispielen modifiziert ist. Anstelle der dem Bremskraftregler 16' vorgeordneten Schaltvorrichtung ist ein Drucksteuerventil 50 vorhanden, das zwischen mindestens zwei Steuerkennlinien (Ausgangsdruck $p_2$ als Funktion des Eingangsdrucks $p_1$) umschaltbar ausgebildet ist. Der Eingang des Drucksteuerventils 50 ist an der Druckluftleitung 18 angeschlossen, während der Ausgang des Steuerventils 50 mit dem Steueranschluß 41 des Bremskraftreglers 16' verbunden ist. Der Bremskraftregler 16' ist einkreisig ausgebildet und entspricht in seinem Aufbau identisch dem in Fig. 2 dargestellten Bremskraftregler 16 mit dem einzigen Unterschied, daß der zweite Steueranschluß 42 entfallen und damit die zweite Steuerkammer 36 und die zweite Steuerfläche 34 am Steuerkolben 29 wirkungslos ist. Die Umschaltung von der einen auf die andere Steuerkennlinie erfolgt elektromagnetisch bei Niveauänderung, wobei wiederum der Niveauregler 14 bei Vorwahl des entsprechenden Fahrzeugaufbauniveaus den Schalter 20 schließt oder öffnet und damit die Kennlinie I oder II im Drucksteuerventil 50 einstellt. Die im Drucksteuerventil 50 realisierten beiden Kennlinien I und II sind in dem Diagramm in Fig. 8 dargestellt. Weitere Kennlinien sind jedoch möglich, wobei eine weitere Kennlinie III im Diagramm der Fig. 8 strichliniert angedeutet ist. NN entspricht dabei dem in den Luftfedern 12 eingesteuerten Luftdruck bei Normalniveau des Fahrzeugaufbaus 10 und TN dem Luftdruck in den Luftfedern 12 bei abgesenktem Fahrzeugaufbau, jeweils bei unbeladenem Fahrzeug. $\Delta$ $p_1$ ist die Druckdifferenz, um die der Luftdruck in den Luftfedern 12 geändert werden muß, um eine Niveauänderung herbeizuführen. Wie man erkennt, bleibt dabei der Ausgangsdruck $p_2$ unverändert.

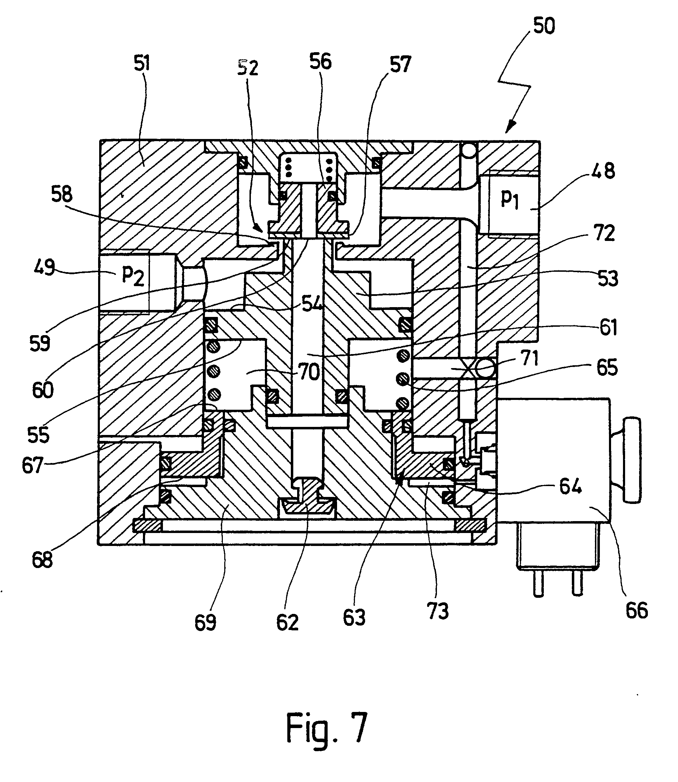

In Fig. 7 ist ein Längsschnitt des Drucksteuerventils 50 schematisch dargestellt. In einem Ventilgehäuse 51 ist ein Doppelsitzventil 52 von einem im Ventilgehäuse 51 axial verschiebbaren Differentialkolben 53 betätigt, der auf einer ersten Steuerfläche 54 vom Eingangsdruck $p_1$ am Eingang 48 des Drucksteuerventils 50 und auf einer zweiten Steuerfläche 55 vom ausgesteuerten Ausgangsdruck $p_2$ am Ausgang 49 des Drucksteuerventils 50 beaufschlagt ist. Das Doppelsitzventil 52 weist einen axial federbelasteten verschiebbaren Ventilkörper 56, der stirnseitig ein Ventilschließglied 57 trägt, und zwei koaxial zueinander angeordnete Ventilsitze 58,59 auf, von denen der erste eine zwischen Ein- und Ausgang 48,49 des Drucksteuerventils 50 angeordnete Durchlaßöffnung 60 im Ventilgehäuse 51 umschließt und der zweite auf der dem Ventilkörper 56 zugekehrten Stirnfläche des durch die Durchlaßöffnung 60 hindurchragenden Differentialkolbens 53 angeordnet ist und dort die Mündung einer den Differentialkolben 53 in seiner vollen Länge durchziehenden Entlastungsbohrung 61 umschließt. Die Entlastungsbohrung 61 steht mit einer Entlüftung 62 im Ventilgehäuse 51 in Verbindung. Der Ventilkörper 56 mit Ventilschließglied 57 bildet mit dem ersten Ventilsitz 58 ein Einlaßventil und mit dem auf den Differentialkolben 53 befindlichen zweiten Ventilsitz 59 ein Auslaßventil. Das Größenverhältnis der Steuerflächen 54,55 am Differentialkolben 53 ist so gewählt, daß die Kennlinie I in Fig. 8 realisiert ist, die möglichst steil sein, d.h. eine Steigung nahe 1 besitzen soll. Nach dieser Steuerkennlinie I steuert das Drucksteuerventil 50 den Ausgangsdruck $p_2$ in Abhängigkeit von dem Eingangsdruck $p_1$, der wiederum von dem Druck in den Luftfedern 12 vorgegeben ist und dieser wiederum vom Beladungszustand des Fahrzeugs abhängt.

Zur Realisierung der zweiten Steuerkennlinie II ist eine in zwei Schaltstellungen umschaltbare Schalteinheit 63 vorgesehen, deren Umschaltung mit der Niveauänderung synchronisiert ist und die bei Niveauabsenkung, d.h. Umschaltung von NN auf TN (Fig. 8), eine mit dem Eingangsdruck $p_1$ gleichwirkende Kraft vorgegebener Größe am Differentialkolben 53 erzeugt. Diese Schalteinheit 63 umfaßt einen zum ersten Differentialkolben 53 koaxialen zweiten Differentialkolben 64, der ebenfalls axial verschieblich im Ventilgehäuse 51 angeordnet ist, eine Druckfeder 65 und ein elektromagnetisch betätigtes Vorsteuerventil 66. Der zweite Diferentialkolben 64 begrenzt mit einer ersten Steuerfläche 67 und einem in das Ventilgehäuse 51 eingesetzten Verschlußstück 55 einen ersten Steuerraum 70, der andererseits von der ersten Steuerfläche 54 des ersten Differentialkolbens 53 begrenzt wird und der über Bohrungen 71,72 im Ventilgehäuse 51 an den Eingang 48 des Drucksteuerventils 50 angeschlossen ist. Die Druckfeder 65 ist in dem ersten Steuerraum 70 angeordnet und stützt sich zwischen der ersten Steuerfläche 54 des ersten Differentialkolbens 53 und der ersten Steuerfläche 67 des zweiten Differentialkolbens 64 ab. Eine von der ersten Steuerfläche 67 abgekehrte Steuerfläche 68 am zweiten Differentialkolben 64 begrenzt zusammen mit dem Verschlußstück 65 einen zweiten Steuerraum 73, der an das Vorsteuerventil 66 angeschlossen ist. Das als 3 2-Wegemagnetventil ausgebildete Vorsteuerventil 66 entlüftet in seiner Grundstellung den zweiten Steuerraum 73 und schließt diesen in seiner Arbeitsstellung an die zu dem Eingang 48 des Drucksteuerventils 50 führende Bohrung 72 an. Je nach Schaltstellung des Vorsteuerventils 66 ist also der zweite Steuerraum 73 entlüftet oder mit dem Eingangsdruck $p_1$ beaufschlagt, wodurch die Schalteinheit 63 im ersten Fall unwirksam und im zweiten Fall aktiviert ist. Die Druckfeder 65 ist so ausgelegt, daß sie bei druckentlastetem zweiten Differentialkolben 64 nicht vorgespannt ist und bei druckbeaufschlagtem und damit um einen vorbestimmten Hub verschobenen zweiten Differentialkolben 64 eine auf den ersten Differentialkolben 53 wirkende Vorspannkraft erzeugt, die gleich dem Produkt aus der Flächengröße der ersten Steuerfläche 54 am ersten Differentialkolben 53 und der in den Luftfedern 12 bei Niveauabsenkung auftretenden Druckdifferenz $\Delta p_1$ ist (Fig. 8). Auf diese Weise bleibt die auf den ersten Differentialkolben 53 wirkende Verschiebekraft auch bei Druckabfall in den Luftfedern 12 infolge von Niveauabsenkung konstant - unveränderter Ladungszustand des Fahrzeugs selbstverständlich vorausgesetzt - , so daß durch die Niveauänderung auch der vom Bremskraftregler 16' ausgesteuerte Bremsdruck nicht beeinflußt wird, sondern nach wie vor ausschießlich die vom Beladungszustand des Fahrzeugs abhängige Größe beibehält. Das Größenverhältnis der Steuerflächen 67,68 am zweiten Differentialkolben 64 wird so bemessen, daß die Vorspannkraft der Druckfeder 65 auch bei Niveauabsenkung des unbeladenen Fahrzeugs einstellbar ist.

Die Erfindung ist nicht auf die beschriebenen Ausführungsbeispiele beschränkt. So kann die erfindungsgemäße achslastabhängige Bremskraftregelvorrichtung auch in Fahrzeugen eingesetzt werden, bei welchen die Niveauregulierung hydraulisch erfolgt und die Luftfedern durch hydropneumatische Federn ersetzt sind.

**Ansprüche**

1. Vorrichtung zur achslastabhängigen Bremskraftregelung für Bremsanlagen von Fahrzeugen, insbesondere von Personenkraftwagen, mit einem in einem Reglergehäuse verschiebbaren Steuerkolben, der zur Modulation des eingesteuerten Bremsdrucks entsprechend dem Beladungszustand des Fahrzeugs von einem Steuerdruck beaufschlagt ist, der von dem in mindestens einem den Fahrzeugaufbau gegen die Fahrzeugachse abstützenden druckmittelgefüllten Federbalg, z.B. Luftfeder, herrschenden Druckmitteldruck abgeleitet ist, dadurch gekennzeichnet, daß Mittel (17;50) vorgesehen sind, die eine mit Änderung des Höhenniveaus des Fahrzeugaufbaus (10) verbundene Druckänderung in den Federbälgen (12) bezüglich des Steuerdrucks für den Steuerkolben (29) so kompensieren, daß die auf den Steuerkolben (29) wirkende Druckkraft im wesentlichen unverändert bleibt.

2. Vorrichtung nach Anspruch 1, dadurch gekennzeichnet, daß die Kompensationsmittel (2) am Steuerkolben (29) vorhandene, bezüglich dessen Verstellrichtung gleichwirkende Steuerflächen (33,34), die jeweils eine Steuerkammer (35,36) begrenzen, und eine zwischen mindestens zwei Schaltstellungen umschaltbare Schaltvorrichtung (17) umfassen, deren Umschaltung mit der Niveauänderung synchronisiert ist und die in ihren Schaltstellungen die eine und/oder andere Steuerkammer (35,36) mit Steuerdruck beaufschlagt bzw. von Steuerdruck entlastet, und daß die Größe der Steuerflächen (33,34) so bemessen ist, daß das Produkt aus Steuerdruck und der Gesamtheit der durch die Schaltvorrichtung (17) wirksamen druckbeaufschlagten Steuerflächen (33,34) vor und nach deren Umschaltung in etwa konstant ist.

3. Vorrichtung nach Anspruch 2, dadurch gekennzeichnet, daß die Schaltvorrichtung (17) von einem 3/2-Wegemagnetventil (43) gebildet ist, das der einen Steuerkammer (36) vorgeschaltet ist und diese in seiner einen Schaltstellung, vorzugsweise in seiner unerregten Grundstellung, entlastet und in seiner anderen Schaltstellung, vorzugsweise in seiner erregten Arbeitsstellung, mit dem Steuerdruck beaufschlagt, und daß die andere Steuerkammer (35) ständig mit dem Steuerdruck beaufschlagt ist.

4. Vorrichtung nach Anspruch 3, dadurch gekennzeichnet, daß das 3/2-Wegemagnetventil (43) im Reglergehäuse (23) derart integriert ist, daß es über seine Ventilanschlüsse die eine Steuerkammer (36) einerseits mit einer Entlastungsöffnung und andererseits mit der anderen Steuerkammer (35) zu verbinden vermag, und daß die andere Steuerkammer (35) mit einem Steueranschluß (41) in Verbindung steht, der mit dem mindestens einen Federbalg (12) verbunden ist.

5. Vorrichtung nach Anspruch 3, dadurch gekennzeichnet, daß das Reglergehäuse (23) zwei Steueranschlüsse (41,42) aufweist, von denen jeweils einer mit einer Steuerkammer (35,36) in Verbindung steht, und daß der eine Steueranschluß (41) unmittelbar und der andere Steueranschluß (42) über das 3/2-Wegemagnetventil (43) und einen Druckbegrenzer (44) mit dem mindestens einen Federbalg (12) verbunden ist.

6. Vorrichtung nach Anspruch 1, dadurch gekennzeichnet, daß das Reglergehäuse (23) einen Steueranschluß (41) aufweist, der mit einem vom Steuerkolben (29) begrenzten Steuerraum (35) in Verbindung steht, daß die Kompensationsmittel ein Drucksteuerventil (50) umfassen, das zwischen mindestens zwei Steuerkennlinien (I,II) umschaltbar ausgebildet ist und den Steueranschluß (41) mit dem mindestens einen Federbalg (12) verbindet, und daß die Kennlinienumschaltung des Drucksteuerventils (50) mit der Niveauänderung synchronisiert ist.

7. Vorrichtung nach Anspruch 6, dadurch gekennzeichnet, daß das Drucksteuerventil (50) einen ein Doppelsitzventil (52) steuernden Differentialkolben (53), der auf einer ersten Steuerfläche (54) vom Eingangsdruck (p₁) und auf einer von dieser abgekehrten zweiten Steuerfläche (55) vom ausgesteuerten Ausgangsdruck (p₂) beaufschlagt ist, und eine zwischen zwei Schaltstellungen umschaltbare Schalteinheit (63) aufweist, deren Umschaltung mit der Niveauänderung synchronisiert ist und die bei Niveauabsenkung eine mit dem Eingangsdruck (p₁) gleichwirkende Kraft vorgegebener Größe am Differentialkolben (53) erzeugt.

8. Vorrichtung nach Anspruch 7, dadurch gekennzeichnet, daß die Schalteinheit (63) einen zum Differentialkolben (53) koaxialen zweiten Differentialkolben (64), der mit einer ersten Steuerfläche (67) der ersten Steuerfläche (54) des ersten Differentialkolbens (53), einen ersten Steuerraum (70) begrenzend, zugekehrt und mit einer flächengrößeren Steuerfläche (68) vom ersten Differentialkolben (53), einen zweiten Steuerraum (73) begrenzend, abgekehrt ist, eine zwischen den Differentialkolben (53,64) sich abstützende Druckfeder (65) und ein elektromagnetisch betätigtes Vorsteuerventil (66) aufweist, daß die zweite Steuerfläche (68) des zweiten Differentialkolbens (64) in seiner einen einer Niveauabsenkung entsprechenden Schaltstellung mit dem Eingangsdruck (p₁) belastet und in der anderen Schaltstellung wieder entlastet.

9. Vorrichtung nach Anspruch 8, dadurch gekennzeichnet, daß das Größenverhältnis der Steuerflächen (54,55) am ersten Differentialkolben (53) so bemessen ist, daß die Steigung der Steuerkennlinie (I) möglichst nahe bei 1 liegt.

10. Vorrichtung nach Anspruch 8 oder 9, dadurch gekennzeichnet, daß die Druckfeder (65) so bemessen ist, daß sie bei druckentlastetem zweiten Differentialkolben (64) nicht vorgespannt ist und bei druckbeaufschlagtem und damit um einen vorbestimmten Hub verschobenem zweiten Differentialkolben (64) eine Vorspannkraft am ersten Differentialkolben (53) erzeugt, die gleich dem Produkt ist aus der Größe der ersten Steuerfläche (54) am ersten Differentialkolben (53) und der bei Niveauabsenkung in dem Federbalg (12) auftretenden Druckdifferenz ($\Delta p_1$).

11. Vorrichtung nach Anspruch 10, dadurch gekennzeichnet, daß das Größenverhältnis der Steuerflächen (67,68) am zweiten Differentialkolben (64) so bemessen ist, daß die Vorspannkraft der Druckfeder (65) auch mit Niveauabsenkung bei unbeladenem Fahrzeug einstellbar ist.

12. Vorrichtung nach einem der Ansprüche 7 - 11, dadurch gekennzeichnet, daß das Doppelsitzventil (52) einen axial federbelasteten, verschiebbaren Ventilkörper (56), der stirnseitig ein Ventilschließglied (57) trägt, einen mit dem Ventilschließglied (57) als Einlaßventil zusammenwirkenden ersten Ventilsitz (58), der eine zwischen Ein- und Ausgang (48,49) des Drucksteuerventils (50) im Ventilgehäuse (51) ausgebildete Durchlaßöffnung (60) umschließt, und einen mit dem Ventilschließglied (57) als Auslaßventil zusammenwirkenden zweiten Ventilsitz (59) aufweist, der auf der Stirnseite des durch die Durchlaßöffnung (60) hindurchtretenden ersten Differentialkolbens (53) angeordnet ist und eine Mündungsöffnung einer den ersten Differentialkolben (53) längsdurchziehenden Entlastungsbohrung (61) umschließt.

Fig. 1

Fig. 2

# Fig. 3

# Fig. 5

Fig. 4

30  23  34  29  36  31  16  28  32  27  24a  25  26

24

24b

43  17  46  45  41  35  33  1  38  37  2

EP 0 399 314 A1

22671

EP 0 399 314 A1

Fig. 6

21

14

20

50

15

A
II
I
E

41

16¹

1

2

2

18

48

49

10

12

11

13

11

12

p₂

III
II
I

Δp₁

α

TN    NN

p₁

Fig. 8

Fig. 7

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-21840803 (MAGNETI MARELLI) <br> * Seite 1, Zeile 70 - Seite 2, Zeile 73; Figuren 1, 2 * <br> --- | 1 | B60T8/30 <br> B60G17/015 |
| A | GB-A-2130322 (NISSIN KOGYO) <br> * Seite 5, Zeile 4 - Seite 6, Zeile 95; Figur 2 * <br> --- | 1 | |
| A | FR-A-2170982 (RENAULT, PEUGEOT) <br> * Seite 1, Zeile 32 - Seite 4, Zeile 32; Figuren 1-3 * <br> --- | 1 | |
| A | US-A-4433872 (PARKER ET AL.) <br> * Zusammenfassung; Figur 1 * <br> --- | 1 | |
| D,A | DE-A-3209247 (GRAUBRMSE) <br> * Seite 10, letzter Absatz - Seite 11; Anspruch 1; Figur 4 * <br> --- | 1 | |
| A | PATENT ABSTRACTS OF JAPAN <br> vol. 8, no. 160 (M-312)(1597) 25 Juli 1984, <br> & JP-A-59 057054 (AKEBONO) 02 April 1984, <br> * das ganze Dokument * <br> ----- | 1 | RECHERCHIERTE SACHGEBIETE (Int. Cl.5 ) <br><br> B60T <br> B60G |

Der vorliegende Recherchenbericht wurde für alle Patentansprüche erstellt

| Recherchenort | Abschlußdatum der Recherche | Prüfer |
|---|---|---|
| DEN HAAG | 22 AUGUST 1990 | MEIJS P. |

EPO FORM 1503 03.82 (P0403)